Europäisches Patentamt

European Patent Office

Office européen des brevets

(11) Numéro de publication: **0 487 440 B1**

(12) **FASCICULE DE BREVET EUROPEEN**

(45) Date de publication de fascicule du brevet: **19.04.95**  (51) Int. Cl.⁶: **F16B  23/00**

(21) Numéro de dépôt: **91440096.5**

(22) Date de dépôt: **20.11.91**

(54) **Serrure industrielle et clé conçue spécialement pour ladite serrure.**

(30) Priorité: **22.11.90 FR 9014836**

(43) Date de publication de la demande:
**27.05.92 Bulletin  92/22**

(45) Mention de la délivrance du brevet:
**19.04.95 Bulletin  95/16**

(84) Etats contractants désignés:
**AT BE CH DE DK ES FR GB GR IT LI LU NL SE**

(56) Documents cités:
**BE-A- 541 197**
**FR-A- 2 204 242**
**US-A- 3 929 152**
**US-A- 4 171 662**

(73) Titulaire: **TCC (TRANSPORTS EN COMMUN DE LA COMMUNAUTE URBAINE DE LILLE) Société anonyme dite:**
**908, avenue de la République**
**F-59700 Marq en Baroeul (FR)**

(72) Inventeur: **Amouri, Ahmed**
**28, rue des Capucines**
**F-59390 Lys lez Lannoy (FR)**

(74) Mandataire: **Lepage, Jean-Pierre**
**Cabinet Lemoine & Associés,**
**30, Boulevard de la Liberté**
**F-59800 Lille (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention est relative à une serrure industrielle, destinée notamment à commander un mécanisme de fermeture de porte, comprenant un verrou actionné à l'aide d'une clé, ainsi qu'une telle clé. Elle trouvera tout particulièrement son application dans les équipements publics.

On connaît l'utilisation de serrures de sécurité dont le pêne est manoeuvré par une clé à empreinte. L'application typique de cette serrure est la fermeture des portes d'entrée des habitations domestiques. L'utilisation industrielle de ce type de serrure est très limitée car, d'une part, il s'agit d'une serrure coûteuse et qui, ensuite, est fragile. Son mécanisme intérieur est très sensible à la poussière et l'effort qui peut être transmis par une clé à empreinte est très limité.

C'est pourquoi dans de nombreuses applications industrielles où la serrure est amenée à transmettre un mouvement à une tringlerie ou un mécanisme conséquent, il faut s'orienter vers des serrures tout à fait spécifiques. Il s'agit de serrures dont la clé de manoeuvre est un carré ou une forme triangulaire. Le canon de la serrure industrielle comporte une empreinte complémentaire dans laquelle la clé peut s'engager pour provoquer la rotation du verrou.

Les constructeurs de matériels industriels utilisent très couramment ce type de serrure car il permet de limiter certains accès d'installation à des agents agréés. La clé est standard pour l'ensemble des équipements, ce qui permet de simplifier tant pour le constructeur que pour les utilisateurs l'ouverture des portes. Même si les livraisons de matériels s'étaient sur plusieurs années, il n'est pas nécessaire pour le constructeur de vérifier l'harmonisation des numéros de serrures, toutes étant identiques.

Le verrou de serrure de forme triangulaire comporte sur sa périphérie un large dégagement circulaire, ce qui permet l'introduction aisée d'une clé à six ou douze pans ou même d'une simple pince à bec plat qui peut prendre appui sur les faces du triangle pour l'entraîner en rotation.

On constate donc qu'il est possible de manoeuvrer le verrou de la serrure sans pour autant disposer de la clé appropriée.

Il faut souligner que le but de ce type de serrure industrielle n'est pas l'inviolabilité totale.

Il s'agit là, avant tout, d'une serrure économique et fonctionnelle qui ne doit pas pouvoir être manoeuvrée inconsidérément.

C'est ainsi que certains biens d'équipement ou équipements collectifs sont précisément dotés de serrures industrielles de type conventionnel. En particulier, les métros comportent des serrures à clé triangulaire, qui permettent d'assurer la commande des portes palières d'accès aux rames, des portes de secours et de portillons à commande manuelle, ainsi que les portes de service des rames. En fonctionnement normal et automatique, ces serrures n'ont pas à être manoeuvrées manuellement. Seulement en cas d'incident, les agents agréés sont autorisés à les manoeuvrer manuellement pour permettre de pallier aux défauts.

Il s'avère que l'ouverture intempestive d'une de ces portes par des voyageurs mal intentionnés déclenche des sécurités et provoque l'arrêt automatique des rames. Par enchaînement, cela peut aller jusqu'au blocage complet de tout le carrousel de rames en exploitation.

Lorsque les sécurités de portes sont ainsi actionnées, il faut nécessairement pouvoir assurer une prise en charge de l'installation à partir du PCC (poste de contrôle et de commandement) qui coupe la haute tension électrique et doit envoyer des agents d'intervention sur les lieux où l'alarme s'est déclenchée.

Ces nuisances engendrées par des interventions inopportunes sont courantes et nécessitent des interventions techniques fréquentes, un renfort de la surveillance et engendrent de sérieuses perturbations.

C'est notamment dans ce cadre qu'a été développée la serrure industrielle de la présente invention, qui tout en conservant la simplicité de construction et de manoeuvre des types conventionnels apporte en plus une sécurité de fonctionnement dans la mesure où seule une clé appropriée en permet la manoeuvre, à l'exclusion des outils traditionnels.

On connait le brevet américain n° 4.171.662 qui décrit une serrure industrielle avec un verrou actionné à l'aide d'une clé par rotation centrale.

On utilise dans ce brevet un profil géométrique de forme pentagonale qui ne présente pas un diamètre constant. Cette absence de construction à diamètre constant est donc qu'elle peut autoriser la manoeuvre avec une prise extérieure. On pourra donc ainsi avec ce verrou connu actionner à l'aide d'une clé ou d'une pince quelconque la serrure en agissant sur les faces opposées du verrou.

Le but principal de la présente invention est de présenter une serrure industrielle ainsi qu'une clé spécifique, qui offrent une grande sécurité d'utilisation puisque, hormis la clé de manoeuvre appropriée, aucun outil ne permet la manoeuvre de la serrure. Il faut également souligner que cette géométrie particulière de fabrication n'entraîne aucun surcoût sensible susceptible de créer un obstacle économique.

L'étude du mode préférentiel de réalisation du verrou de manoeuvre de la serrure a été réalisée pour qu'elle n'offre aucune prise extérieure.

D'autres buts et avantages de la présente invention apparaîtront au cours de la description suivante, qui est donnée à titre indicatif.

Selon l'invention, la serrure, destinée notamment à commander un mécanisme de fermeture de porte, comprenant un verrou actionné à l'aide d'une clé par rotation du verrou central, est caractérisée par le fait que ledit verrou présente un profil géométrique en forme de pentagone à diamètre constant et dont les faces sont bombées et raccordées de façon non anguleuse.

Par ailleurs, la clé spécialement conçue pour la serrure de la présente invention est caractérisée par le fait qu'elle présente une cavité dont le profil correspond à celui dudit verrou pentagonal à diamètre constant.

L'invention sera mieux comprise à la lecture de la description suivante, accompagnée de dessins en annexe, parmi lesquels :

- la figure 1 représente un mode de réalisation de la serrure de l'invention en perspective,
- la figure 2 représente en vue de face le verrou de la serrure représentée à la figure 1 avec sa géométrie particulière,
- la figure 3 représente schématiquement le tracé géométrique préconisé pour la réalisation du verrou de serrure selon la présente invention,
- la figure 4 montre, en perspective, la partie mâle du verrou, isolée de son boîtier,
- la figure 5 montre la construction géométrique du profil préconisé du verrou selon la présente invention.

L'invention vise une serrure industrielle, destinée notamment à commander un mécanisme de fermeture de porte, comprenant un verrou actionné à l'aide d'une clé par rotation centrale. Elle trouvera tout particulièrement son application sur les équipements accessibles au public.

De nombreuses installations industrielles sont équipées de serrures commandées par une simple clé carrée ou triangulaire. Les portes verrouillées par ce type de serrure ne peuvent, en théorie, être ouvertes que par des agents autorisés possédant la clé adéquate.

Ces équipements sont généralement satisfaisants sur le Plan de leur robustesse et de leur conception économique. Ils offrent également des avantages sur le plan de la standardisation.

Cependant, pour certaines applications, il s'avère que ce type de verrou triangulaire ou carré soit trop vulnérable, ce qui engendre des perturbations. En particulier, dans les transports urbains tels que le métro, l'expérience montre que le verrou triangulaire peut facilement être manoeuvré à l'aide d'un outil tel qu'une clé à six pans ou même une pince plate.

Dans ces conditions, la sécurité d'accès aux équipements et la protection des personnes ne peuvent être totalement assurées.

Le problème dans ce cas, lorsqu'il s'agit d'installations automatiques, est que l'ouverture de la porte par une personne non habilitée actionne un contact électrique de sécurité qui peut lui-même aller jusqu'à paralyser la circulation des métros sur le réseau.

Le nombre sans cesse croissant de ces perturbations réclame une parade et c'est précisément l'objet de la serrure de la présente invention, qui offre une sécurité de fonctionnement renforcée, exigeant l'utilisation d'une clé spécifique pour être actionnée et interdisant son actionnement par toute autre clé ou pince quelconque.

En effet, la serrure de la présente invention est telle qu'elle interdise la prise d'une clé ou pince quelconque sur des faces opposées du verrou. Ainsi, seuls les agents agréés munis de la clé adéquate sont en mesure de manoeuvrer le verrou de serrure industrielle de la présente invention.

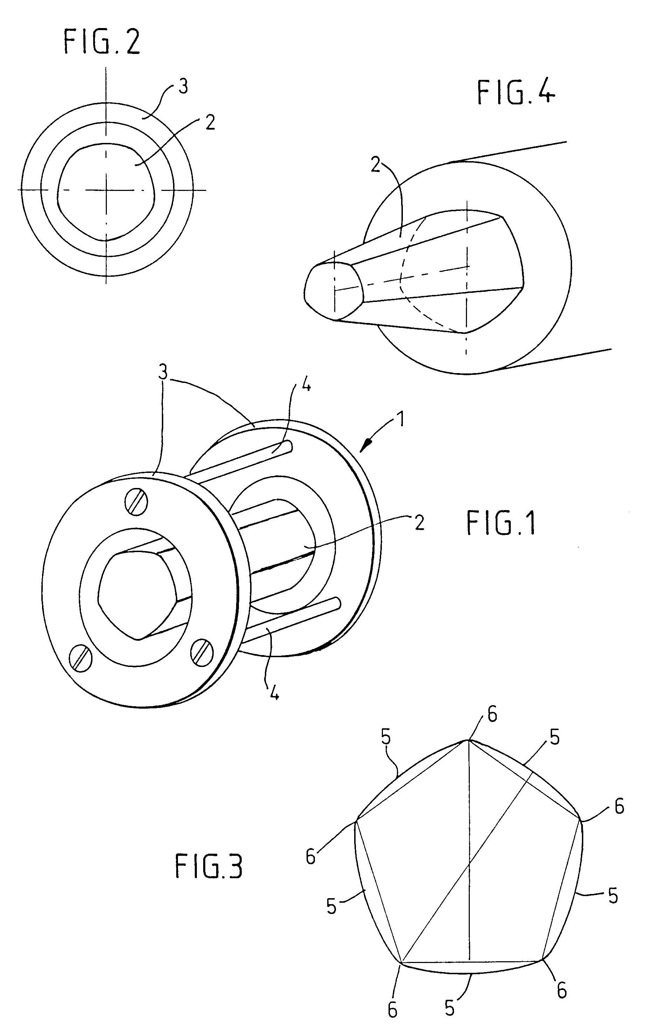

La figure 1 illustre, à titre d'exemple, un boîtier industriel (1), qui comporte un verrou central (2) selon la présente invention, mobile en rotation dans le boîtier (1).

Ce boîtier (1), constitué notamment de flasques (3), est appliqué sur la porte à équiper à laquelle il est fixé a l'aide, par exemple, de tiges filetées traversantes (4). La forme du boîtier (1, 3) et des moyens de fixation (4) importe peu dans le cadre de la présente invention et leur conception est à la portée de l'Homme de l'Art.

Néanmoins, il est à noter que le verrou central (2) est avantageusement encastré dans le boîtier (1) afin d'autoriser l'accès au verrou (2) uniquement à l'aide d'une clé femelle, non représentée, dont la cavité présente un profil correspondant au verrou à actionner.

Selon le concept de base de l'invention, le verrou (2) présente un profil géométrique pentagonal. Néanmoins, il est à remarquer que les arêtes vives ne sont pas recommandables car elles sont favorables à une prise. Ainsi, avantageusement, selon l'invention, les arêtes (6) du pentagone sont bombées ou arrondies.

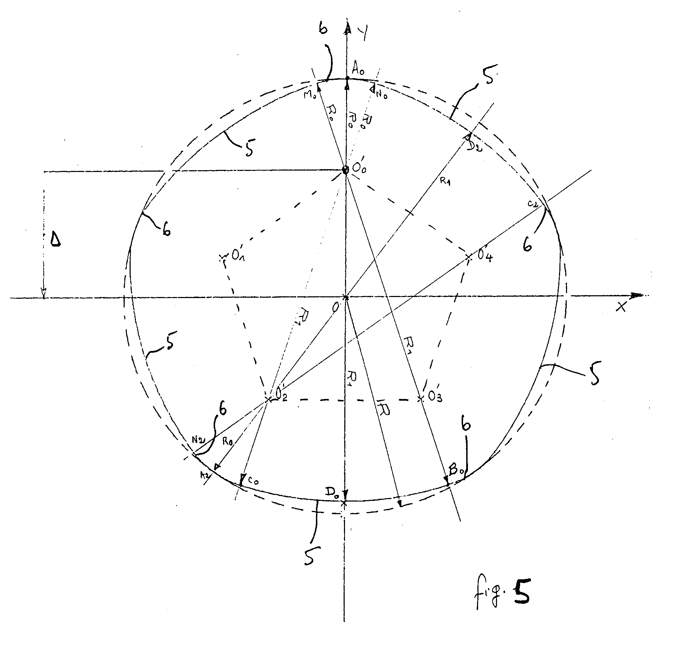

Le rayon de courbure adopté pour former les arrondis des arêtes (6) doit être inférieur au rayon du cercle dans lequel le pentagone s'inscrit. A ce sujet, il y a lieu de se reporter à la description de la figure 5.

La figure 2 représente l'empreinte particulière d'un verrou, selon un mode de réalisation avantageux de l'invention, mobile en rotation dans le boîtier (1).

Ce verrou présente un profil géométrique pentagonal, à diamètre constant, c'est-à-dire que lors de la rotation du verrou, le segment passant par le centre de construction du pentagone est constant. Ceci sera mieux compris avec la description de la figure 5. Le pentagone est régulier, chacune de ses faces ayant la même longueur et leur intersection rencontrant une portion de cercle sans zone anguleuse.

De la sorte, le pentagone s'inscrit dans un cercle et il est judicieux de choisir un diamètre intérieur pour le boîtier (1, 3) légèrement supérieur au diamètre du cercle dans lequel le verrou (2) pentagonal s'inscrit. Ainsi, il existe un très faible espace entre le boîtier (1) et le verrou (2), ce qui empêche d'insérer un outillage.

La sécurité est améliorée par l'utilisation des faces bombées pour la réalisation de la forme pentagonale du verrou (2). Ces faces bombées réduisent en outre encore le jeu existant entre le verrou (2) et le boîtier (1).

La figure 3 représente schématiquement le tracé géométrique préconisé pour la construction du verrou (2) pentagonal à diamètre constant. Chacune des faces (5) du pentagone de la figure 3 est formée par un arc de cercle. Le rayon de courbure de ces arcs de cercle doit être supérieur à celui du cercle dans lequel le pentagone s'inscrit.

Cette réalisation offre de nombreux avantages. Tout d'abord, à l'opposé de chacune des faces du pentagone se trouve un profil arrondi, ce qui signifie qu'il s'agit d'une forme difficile à saisir avec une pince puisque la prise est mauvaise. En outre, si l'un des becs de la pince a appui sur une surface arrondie, l'autre bec rencontre aussi une surface arrondie.

La figure 5 montre plus en détails la construction dudit pentagone à diamètre constant. Ce diamètre est défini par la somme de deux valeurs appelées $R_0$ et $R_1$.

Pour construire le pentagone dans un plan (xoy), il y a lieu d'abord de positionner le centre $O'_0$ de distance caractéristique $\Delta$ par rapport au centre O du cercle dans lequel sera inscrit ledit pentagone.

Le choix de ce centre $O'_0$ sera présidé par le fonctionnement du système, l'effort à exercer sur la clé pour déverrouiller, la non facilité de prise avec un outil autre que la clé adéquate, et le degré d'usure.

Dans l'exemple montré à la figure 5, le point $O'_0$ de distance caractéristique $\Delta$ est par exemple situé sur l'axe des y. La variation du point $O'_0$ sur l'axe des y entre le point O, centre du cercle circonscrit, et le point $A_0$ d'intersection de ce cercle avec l'axe des y, n'altère en rien la constance du rapport $R_0/R_1$ ou de la somme $R_0 + R_1$.

Deux points limites apparaissent néanmoins, si d'une part $O'_0$ est confondu avec $A_0$ ou d'autre part si $O'_0$ est confondu avec O. Ainsi, le point $O'_0$ sera choisi entre ces deux limites et avantageusement de façon à ce que le rapport $R_0/R_1$ soit compris entre 0,08 et 0,5.

Une fois la distance caractéristique $\Delta = OO'_0$ déterminée, c'est-à-dire dès que le point $O'_0$ est fixé par rapport au centre O du cercle circonscrit, le rayon $R_0$ a pour mesure la distance entre ce point et le point de tangence avec le cercle circonscrit de rayon R et de centre O.

Par ailleurs, on définit cinq centres $O'_i$ (i = 0, 1, 2, 3, 4), correspondant au sommet d'un pentagone régulier dont les côtés sont égaux, contenu dans ledit pentagone à diamètre constant. Sur la figure 5, ce pentagone est défini par ses sommets $O'_0$, $O'_1$, $O'_2$, $O'_3$ et $O'_4$.

A partir donc de ces centres $O'_i$, on trace des arcs de cercle de rayon $R_0$ tels que définis ci-dessus. Par ailleurs le grand rayon $R_1$ est également issu du centre $O'_i$ et est tel que l'arc de cercle de rayon $R_1$ est tangent aux deux arcs de cercle de centre $O'_{i \pm 2}$ et de rayon $R_0$.

Au point de tangence, les arcs de cercle sont alignés. On peut en continuant cette construction construire le périmètre du pentagone par la réunion alternée des arcs de cercle de rayon $R_0$ et de rayon $R_1$ dont les centres $O'_i$ sont les sommets dudit pentagone contenu défini précédemment.

Lorsque les centres $O'_i$ sont fixés, le diamètre constant du pentagone est précisément la somme de $R_0$ et $R_1$. $R_0$ et $R_1$ étant des constantes, leur rapport $R_0/R_1$ est constant et leur somme $R_0 + R_1$ est également constante. Autrement dit, comme le montre la figure 5, on a les distances $A_0D_0 = A_0O'_0 + O'_0D_0 = N_0C_0 = M_0B_0 = A_2D_2 = N_2C_2 = ...$

Avec cette construction, le centre $O'_i$ (i = 0, 1, 2, 3, 4) pourra se situer sur l'axe y du plan oxy entre le centre O et le point d'intersection $A_i$. Dans le premier cas, la distance $OO'_i$ pourra être aussi petite que l'on voudra, on aura toujours un pentagone à diamètre constant ; dans le second cas, la distance $O'_iA_i$ pourra être aussi petite que l'on voudra, on aura aussi un pentagone à diamètre constant finissant dans ce cas sur des arêtes vives. Ce sont les deux limites précitées entre lesquelles on choisira un rapport des rayons $R_0/R_1$ convenable comme évoqué ci-dessus.

Dans un premier mode de réalisation, on peut envisager de réaliser la partie saillante (2) du verrou avec une section constante, c'est-à-dire que ses chants seront parallèles deux à deux, comme le montre la figure 1. Le profil du verrou s'inscrira alors dans un volume de révolution cylindrique.

Cependant, dans un autre mode de réalisation, tel que celui illustré à la figure 4, qui montre une vue en perspective de la partie mâle du verrou (2) présentant un profil de section polygonale à diamètre constant selon ce qui vient d'être décrit. Néanmoins, ce verrou (2) se présente sous la forme d'un tronc de pyramide. On obtient ainsi un verrou (2) dont le profil pentagonal à diamètre constant bombé s'inscrit dans un volume de révolution conique.

Ainsi, la difficulté de violation du verrou par une personne non autorisée est encore accrue.

La présente invention concerne également la clé correspondant à la serrure. Sa fabrication n'est toutefois pas décrite car elle découle implicitement de la construction géométrique précitée.

Il s'agit toutefois de réaliser une clé présentant une cavité dont le profil correspond à celui dudit verrou pentagonal à diamètre constant. Ainsi cette forme complémentaire parfaite s'emboitera sur le verrou et autorisera la rotation de ce dernier. En outre, la périphérie de la clé sera prévue notamment circulaire pour correspondre à l'intérieur du boîtier (1) sans gêner la rotation de l'embout.

D'autres mises en oeuvre de la présente invention, à la portée de l'Homme de l'Art, auraient également pu être envisagées sans pour autant sortir du cadre de celle-ci.

**Revendications**

1. Serrure industrielle, destinée notamment à commander un mécanisme de fermeture de porte, comprenant un verrou actionné à l'aide d'une clé par rotation centrale, caractérisée par le fait que ledit verrou (2) présente un profil géométrique de forme pentagonale à diamètre constant, et dont les faces sont bombées et raccordées de façon non anguleuse, le périmètre du pentagone à diamètre constant étant constitué par la réunion alternée des arcs de cercle (5, 6) de rayon $R_0$ et de rayon $R_1$ dont les centres $O'_i$ sont les sommets d'un pentagone contenu dans ledit pentagone à diamètre constant.

2. Serrure industrielle selon la revendication 1, caractérisée par le fait que les faces du verrou (2) de forme pentagonale sont en arc de cercle (5) de rayon $R_1$.

3. Serrure industrielle selon la revendication 1, caractérisée par le fait que les arêtes (6) de raccordement des faces (5) du profil pentagonal sont en arc de cercle de rayon $R_0$.

4. Serrure industrielle selon la revendication 1, caractérisée par le fait que le rapport des rayons $R_0/R_1$ est choisi entre 0,08 et 0,5 et que la somme des rayons $R_0$ + $R_1$ est constante.

5. Serrure industrielle selon la revendication 1, caractérisée par le fait que le verrou pentagonal à diamètre constant est encastré dans un boîtier (1, 3) autorisant l'accès au verrou (2) à l'aide d'une clé femelle dont la cavité présente un profil correspondant au verrou.

6. Clé spécialement conçue pour la serrure industrielle selon la revendication 1, caractérisée par le fait qu'elle présente une forme complémentaire parfaite s'emboitant sur le verrou pentagonal à diamètre constant dont les faces sont bombées et raccordées de façon non anguleuse, la périphérie de la clé étant prévue avec une forme circulaire pour correspondre à l'intérieur du boîtier sans gêner sa rotation.

**Claims**

1. Industrial lock viz. for controlling a door locking-mechanism, comprising a bolt actuated by means of a key through central rotation, characterized in that said bolt (2) has a pentagonally shaped geometrical profile with constant diameter, the faces of which are bulging and non-angularly connected, the perimeter of the pentagone with constant diameter being formed by the alternate joining of the arches of a circle (5, 6) with radius $R_0$ and radius $R_1$ the centres $O'_1$ of which are the apices of a pentagone contained in said pentagone with constant diameter.

2. Industrial lock according to claim 1, characterized in that the faces of the pentagonally shaped bolt (2) are in the shape of an arch of a circle (5) with radius $R_1$.

3. Industrial lock according to claim 1, characterized in that the edges (6) connecting the faces (5) of the pentagonal profile are in the shape of an arch of a circle with radius $R_0$.

4. Industrial lock according to claim 1, characterized in that the ratio between the radii $R_0/R_1$ is chosen between 0,08 and 0,5 and that the sum of the radii $R_0$ + $R_1$ is constant.

5. Industrial lock according to claim 1, characterized in that the pentagonal bolt with a constant diameter is built-in in a casing (1, 3) allowing the access to the bolt (2) by means of a female key the cavity of which has a profile corresponding to the bolt.

6. Key particularly designed for the industrial lock according to claim 1, characterized in that it has a perfect complementary shape fitting onto the pentagonal lock with constant diameter the faces of which are bulging and non-angularly connected, the periphery of the key being provided for with a circular shape in order to match the inside of the casing without impeding its rotation.

**Patentansprüche**

1.   Industrielles Schloß, nämlich zum Bedienen eines Türschließmechanismus, umfaßend einen Riegel, der durch eine zentrale Drehung von einem Schlüßel betätigt wird, dadurch gekennzeichnet, daß der genannte Riegel (2) ein geometrisches Profil fünfeckiger Form mit konstantem Durchmesser aufweist, dessen Flächen gewölbt und nichtwinkelförmig verbunden sind, wobei der Umkreis des Fünfecks mit konstantem Durchmesser durch wechselweise Verbindung der Kreisbögen (5,6) mit Radius $R_0$ und Radius $R_1$ gebildet ist, deren Mittelpunkte $O'_1$ die Eckpunkte eines innerhalb des genannten Fünfecks mit konstantem Durchmesser enthaltenen Fünfecks sind.

2.   Industrielles Schloß nach Anspruch 1, dadurch gekennzeichnet, daß die Flächen des fünfeckförmigen Riegels (2) in der Form eines Kreisbogens (5) mit Radius $R_1$ sind.

3.   Industrielles Schloß nach Anspruch 1, dadurch gekennzeichnet, daß die Verbindungsränder (6) der Flächen (5) des fünfeckigen Profils in der Form eines Kreisbogens mit Radius $R_0$ sind.

4.   Industrielles Schloß nach Anspruch 1, dadurch gekennzeichnet, daß das Verhältnis der Radien $R_0/R_1$ zwischen 0,08 und 0,5 gewählt ist und daß die Summe der Radien $R_0 + R_1$ konstant ist.

5.   Industrielles Schloß nach Anspruch 1, dadurch gekennzeichnet, daß der fünfeckige Riegel mit konstantem Durchmesser in einem Gehäuse (1,3) eingebaut ist, das den Zugang zum Riegel (2) mittels eines weiblichen Schlüßels erlaubt, dessen Hohlraum ein dem Riegel entsprechendes Profil aufweist.

6.   Schlüßel, der besonders für das industrielle Schloß nach Anspruch 1 entworfen ist, dadurch gekennzeichnet, daß er eine perfekt ergänzende Form hat, die auf dem fünfeckigen Riegel mit konstantem Durchmesser paßt, dessen Flächen gewölbt und nichtwinkelförmig verbunden sind, wobei der Umkreis des Schlüßels mit einer kreisförmigen Gestalt vorgesehen ist, um dem Inneren des Gehäuses zu entsprechen, ohne dessen Drehen zu verhindern.

FIG.2

FIG.4

FIG.1

FIG.3

fig. 5